(19) Europäisches Patentamt
European Patent Office
Office européen des brevets

(11) Publication number : **0 443 230 B1**

(12) **EUROPEAN PATENT SPECIFICATION**

(45) Date of publication of patent specification : **31.08.94 Bulletin 94/35**

(51) Int. Cl.$^5$ : **H01M 4/86,** C25B 11/03

(21) Application number : **90301781.2**

(22) Date of filing : **20.02.90**

(54) **Electrochemical cell and process.**

(43) Date of publication of application : **28.08.91 Bulletin 91/35**

(45) Publication of the grant of the patent : **31.08.94 Bulletin 94/35**

(84) Designated Contracting States : **AT BE CH DE DK ES FR GB GR IT LI LU NL SE**

(56) References cited :
**EP-A- 0 047 595**
**FR-A- 2 213 101**
**GB-A- 1 443 502**

(73) Proprietor : **ATRAVERDA LIMITED**
**Darenth House**
**Rotherham Road**
**Eckington**
**GB-Sheffield 831 9FH (GB)**

(72) Inventor : **Brooks, William**
**19 Highbank Road**
**Kingsley, Cheshire (GB)**

(74) Representative : **Shaw, Laurence**
**5th Floor,**
**Metropolitan House,**
**1 Hagley Road,**
**Edgbaston**
**Birmingham B16 8TG (GB)**

**EP 0 443 230 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to an electrochemical cell containing a gas electrode and to a method of operating the electrochemical cell.

Gas electrodes are electrodes at which a gaseous reactant is oxidised or reduced in an electrolyte. All example of such a gas electrode is a so-called air cathode, to which an oxygen containing gas such as air is supplied and at which the oxygen in the gas is reduced in the electrolyte.

Examples of uses which have been proposed for a gas electrode include use as an air cathode in a chlor-alkali cell in which aqueous alkali metal chloride solution is electrolysed to produce chlorine and aqueous alkali metal hydroxide solution. The cell may comprise at least one anode and at least one cathode separated by a separator, which may be a hydraulically permeable diaphragm or a substantially hydraulically impermeable ion-exchange membrane. Oxygen-containing gas is supplied to the air cathode and the oxygen in the gas is reduced to hydroxide.

Another example of a use which has been proposed for a gas electrode is as an air cathode in an electrochemical cell in which oxygen is reduced to peroxide. In such a cell the electrolyte may be acidic in which case oxygen is reduced at the cathode to form hydrogen peroxide, or the electrolyte may be alkaline in which case the product of reduction of the oxygen at the cathode is alkali metal peroxide.

Other uses which have been proposed for gas electrodes are in fuel cells and in batteries.

In this specification it is to be understood that by the expression 'electrochemical cell' it is intended to include both an electrochemical cell in which an electrolyte is decomposed by electrical energy supplied to the cell and a cell in which electrical energy is generated by means of a chemical reaction occurring in the cell, e.g. as in a fuel cell or a battery.

A gas electrode, such as an air electrode, generally has a porous structure which promotes intimate contact between the electrolyte in the cell and the gas supplied to the cell. Porous structures which have been proposed for use as gas electrodes include porous electrodes made of carbon. However, such porous structures made of carbon suffer from disadvantages. For example, a porous carbon air cathode in a chlor-alkali cell or in a fuel cell containing phosphoric acid as electrolyte is chemically attacked by the electrolyte such that the performance of the cathode is degraded, and in a cell in which oxygen is reduced to hydrogen peroxide or alkali metal peroxide a porous carbon air cathode is chemically attacked by the peroxide such that the surface of the cathode is eroded.

GB-A-1443502 discloses an electrochemical electrode comprising a porous base structure formed of a titanium oxide having the empirical formula TiOx where X is 0.25 to 1.50, the base structure being partially covered by a coating containing a substance effective to reduce the voltage drop which takes place in use of the electrode. EP-A-0047595 discloses electrodes formed of a titanium oxide having the general formula TiOx where X is 1.55 to 1.9.

It is an object of the invention to provide for an electrochemical cell a porous gas electrode which is dimensionally stable and which is less susceptible to chemical attack in use.

According to the invention in one aspect there is provided an electrochemical cell having a plurality of electrodes, wherein at least one of said electrodes is an anode and at least one of said electrodes is a cathode, and at least one of said electrodes is of a porous gas electrode structure wherein said porous gas electrode structure comprises an electrically conductive titanium suboxide of a general formula TiOx, where X is less than 1.95 and greater than 0.25 and is associated with means for supplying gas to the electrode.

According to the invention in another aspect there is provided a method of operating an electrochemical cell having a plurality of electrodes, at least one of said electrodes being an anode and at least one of said electrodes being a cathode, one of said electrodes being a porous gas electrode structure, wherein said porous gas electrode structure comprises an electrically conductive titanium suboxide of the general formula TiOx, where X is less than 1.95 and greater than 0.25, and including the step of supplying gas via gas supply means to the electrode.

In the electrochemical cell one or other of the anode or cathode, or both the anode and cathode, may be a gas electrode as described, and the electrochemical cell may comprise a plurality of anodes and cathodes. The gas electrode in the electrochemical cell may be an air cathode in which, in use, an oxygen containing gas, for example, air is supplied to the cathode and reduced at the cathode, e.g. to hydroxide or peroxide. The gas electrode may be an anode to which hydrogen is supplied and at which hydrogen is oxidised.

Specific uses of the electrochemical cell containing the gas electrode will be described hereinafter.

As x in the formula $TiO_x$ increases the electrical conductivity of the $TiO_x$ decreases. However, as x increases the resistance of the titanium suboxide to attack by the electrolyte in the electrochemical cell generally also increases, particularly in a cell in which aqueous akali metal chloride solution is electrolysed, and it is preferred that x in the formula $TiO_x$ be greater than 0.5 and more preferably that it be in the range 1.67 to 1.9, as in the latter range of values of x there is a desirable balance between electrical conductivity and resistance to chemical attack.

The gas electrode is made of or comprises an electrically conducting titanium suboxide. Thus, the electrode may consist essentially of titanium suboxide, that is of titanium suboxide apart from a catalytic coating which may be present on the surface of the electrode, and an electrical conductor which may possibly be connected to the electrode. On the other hand, the electrode may comprise a porous substrate of a material other than titanium suboxide which substrate has a coating of titanium suboxide. For example the electrode may comprise a porous metallic substrate e.g. of titanium, and a coating of titanium suboxide on the surface of the metallic substrate

The titanium suboxide $TiO_x$ may be formed in a number of ways. For example $TiO_2$, powder may be heated in a reducing atmosphere, e.g.in an atmosphere of hydrogen, or a mixture of $TiO_2$, powder and a solid reducing agent, e.g. titanium itself, may be converted to $TiO_x$ by heat treating in an inert atmosphere e.g. in an atmosphere of argon or in vacuum. Other solid reducing agents which may be used include TiN, $TiSi_2$, carbon, Si, TiO and $Ti_2O_3$. Suitable conditions under which to produce the desired titanium suboxide $TiO_x$ are disclosed in the aforementioned European Patent 47595.

The titanium suboxide $TiO_x$ may be produced before or after formation of the gas electrode structure. Thus, a titanium suboxide of the desired formula may be produced in powder form and the powder then formed into the gas electrode structure. Alternatively, titanium dioxide, and optionally a solid reducing agent, may be formed into a gas electrode structure and the titanium dioxide may subsequently be converted to the desired titanium suboxide, e.g. by the methods hereinbefore described. It is essential that the gas electrode of the electrochemical cell of the invention be porous in order that in use intimate contact may be effected between the gas and the electrolyte in the cell. The porosity should be of the open interconnected pore type such that the gas and electrolyte may pass into the electrode. In general the porosity of the gas electrode will be at least 10%, and it may even be as high as 80%. The porosity of the gas electrode is suitably in the range 20% to50%.

A porous gas electrode structure which consists essentially of titanium suboxide may be made, for example, by compaction of the titanium suboxide powder and sintering the powder, or by containing the titanium suboxide powder in a suitable container, or by moulding a composition comprising particulate titanium suboxide, water, and a water-soluble or water-dispersible organic polymeric material into the desired shape of the gas electrode structure, drying the thus formed structure, heating the structure in order to decompose and remove the organic polymeric material from the structure, and heating the structure at a higher temperature in order to sinter the particulate titanium suboxide. Suitable water-soluble organic polymeric materials include hydroxy propyl methyl cellulose, polyacrylamide, polyethyleneoxide and partially hydrolysed polyvinyl acetate. The proportion of organic polymeric material in the composition which is moulded into the gas electrode structure has an effect on the porosity of the ultimately produced gas electrode, the greater the proportion of such material in the composition the greater will be the porosity of the ultimately produced gas electrode. The mouldable composition may suitably comprise from 10% to 40% of organic polymeric material by weight of the particulate material in the composition. The amount of water in the composition should be such as to make the composition mouldable and a proportion of water in the range 10% to 30% by weight of the titanium suboxide in the composition will generally be suitable.

The gas electrode structure may be produced from fibres of titanium suboxide, and the fibres for example in the form of a mat, may be sintered together.

The gas electrode structure may be produced from particulate titanium dioxide, optionally admixed with a solid reducing agent, in which case the gas electrode structure must be treated, e.g. in the manner hereinbefore described, in order to convert the titanium dioxide to titanium suboxide.

Where the gas electrode comprises a porous substrate of a material other than titanium suboxide which substrate has a coating of titanium suboxide the gas electrode may be produced by application of titanium suboxide to a porous substrate, for example to a porous metal substrate, e.g. to a porous titanium substrate. Alternatively, the gas electrode may be produced by application of titanium dioxide to a porous substrate and subsequently reducing the thus applied titanium dioxide. In yet a further method of production a surface layer of titanium dioxide may be formed by oxidation of a porous titanium substrate and the titanium dioxide may subsequently be reduced to titanium suboxide.

In the case where titanium dioxide on the surface of a porous substrate is reduced to titanium suboxide care should be taken to effect the reduction by a method which does not have an adverse effect on the substrate. For example where the titanium dioxide is on the surface of a porous titanium substrate reduction of the titanium dioxide should not be effected by heating in the presence of hydrogen as this will have an adverse effect on the titanium substrate. For example, embrittlement of the titanium substrate may take place. Where the gas electrode comprises titanium suboxide on a porous titanium substrate the electrode is suitably produced by flame or plasma spraying of the porous titanium substrate, or by reduction of the titanium dioxide in the presence of carbon monoxide.

The gas electrode may be equipped with an electrical conductor through which electrical power may be fed to or removed from the electrochemical cell. The electrical conductor may be, for example, a metallic conductor, e.g. of copper, which is bonded to or otherwise fixed to the gas electrode. For example,

the electrical conductor may be bonded to the gas electrode by means of an electrically conducting cement e.g. a cement which contains a substantial proportion of a particulate metallic material.

The gas electrode in the electrolytic cell of the invention is provided with means for feeding a gas to the electrode. This means may for example be constituted by a pipe leading to a face of the gas electrode from the exterior of the cell. In general a face of the gas electrode other than that to which gas is fed, e.g. an opposite face of the gas electrode, will be in contact with the electrolyte when the cell is in operation.

The electrochemical cell of the invention containing the gas electrode may be used in a variety of different applications.

The electrochemical cell may be a chlor-alkali cell comprising one or more anodes, one or more cathodes which are gas electrodes as described and which serve as air cathodes, and a separator positioned between each anode and adjacent cathode to form separate anode and cathode compartments. The separator may be a hydraulically permeable diaphragm or a substantially hydraulically impermeable cation-exchange membrane. In operation of the cell as a diaphragm cell aqueous alkali metal chloride solution is charged to the anode compartments of the cell. Chlorine which is produced at the anodes is removed from the anode compartments of the cell, the alkali metal chloride solution passes through the diaphragms, an oxygen containing gas e.g. air is fed to the cathodes, and alkali metal hydroxide produced by electrolysis and by reduction of oxygen are removed from the cathode compartments, the alkali metal hydroxide being removed in the form of an aqueous solution of alkali metal chloride and alkali metal hydroxide. Where an aqueous alkali metal chloride solution is electrolysed in a cell of the membrane type the solution is charged to the anode comparments of the cell, water or dilute aqueous alkali metal hydroxide solution is charged to the cathode compartments of the cell, and an oxygen-containing gas, e.g. air, is fed to the cathodes, chlorine produced in the electrolysis and depleted aqueous alkali metal chloride solution are removed from the anode compartments, alkali metal ions are transported across the membranes to the cathode compartments of the cell, and alkali metal hydroxide solution produced by the reaction of alkali metal ions with water and by reduction of oxygen is removed from the cathode compartments of the cell.

In the electrolytic cell which is to be used as a chlor-alkali cell the anode may suitably be formed of a film-forming metal selected for example from titanium, zirconium, niobium, hafnium and tantalum, with titanium being the preferred film forming metal. Alternatively, the anode may be formed of or may comprise a titanium suboxide as described, and the anode may be porous or non-porous. The anodes may have a surface coating of an electrocatalytically-active material, for example a platinum group metal and/or a platinum group metal oxide. A preferred coating is a mixture or a solid solution of a platinum group metal oxide and an oxide of a film forming metal, e.g. a coating of $RuO_2$ and $TiO_2$. Electrocatalytically-active materials suitable for use as anode coatings in chloralkali cells are well known in the art.

The air cathode in the chlor-alkali cell may also have a coating of an electrocatalytically active material which promotes reduction of oxygen at the cathode. Examples of electrocatalytically-active materials include platinum group metals, that is metals selected from platinum, ruthenium, rhodium, iridium and osmium.

Where the separator in the electrolytic cell is a hydraulically permeable diaphragm it may be made of asbestos or of a porous organic polymeric material. Preferred organic polymeric materials are fluorine-containing polymeric materials on account of the generally stable nature of such materials in the corrosive environment encountered in a chlor-alkali electrolytic cell. Suitable fluorine- containing polymeric materials include, for example polychloro-trifluoroethylene, fluorinated ethylenepropylene copolymer, and polyhexafluoropropylene. A preferred fluorine- containing polymeric material is polytetra- fluoroethylene on account of its great stability in the corrosive environment of a chlor-alkali electrochemical cell environments.

Such hydraulically permeable diaphragm materials are known in the art.

Preferred separators for use as ion-exchange membranes which are capable of transferring ionic species between the anode and cathode compartments of an electrochemical cell are those which are cation perm- selective. Such ion exchange membranes are known in the art and are preferably fluorine-containing polymeric materials containing anionic groups. The polymeric materials preferably are fluorocarbons containing the repeating groups

$$[C_mF_{2m}]_M \text{ and } [CF_2 - \underset{\displaystyle X}{\underset{|}{CF}}]_N$$

where m has a value of 2 to 10, and is preferably 2, the ratio of M to N is preferably such as to give an equivalent weight of the groups X in the range 600 to 2000, and X chosen from

A or

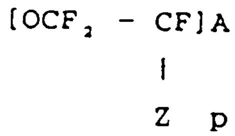

where p has a value of for example 1 to 3, Z is fluorine or a perfluoroalkyl group having from 1 to 10 carbon atoms and A is for example, COOH or $SO_3$ H or a derivative thereof, e.g. an alkali metal salt therof.

SO3H group-containing ion-exchange membranes are sold under the tradename 'Nafion' by E I du Pont de Nemours and Co Inc and -COOH group containing ion exchange membranes under the tradename 'Flemion' by the Asahi Glass Co. Ltd.

The electrolytic cell may be a cell for the production of peroxide comprising one or more anodes, one or more cathodes which are gas electrodes as described and which serve as air cathodes, and a separator positioned between each anode and adjacent cathode to form separate anode and cathode compartments. The separator may be a hydraulically permeable diaphragm or a substantially hydraulically impermeable cation-exchange membrane.

In operation of the cell to produce peroxide the electrolyte which is electrolysed may acidic or basic, for example the electrolyte may be an aqueous solution of an acid, e.g. sulphuric acid, or it may be an aqueous solution of an alkali metal hydroxide, e.g. sodium hydroxide or potassium hydroxide. In operation of the cell as a diaphragm cell electrolyte is charged to the anode compartments of the cell, oxygen which is produced in the electrolysis is removed from the anode compartments of the cell, the electrolyte passes through the diaphragms, an oxygen-containing gas, e.g. air, is fed to the cathodes, and an aqueous solution containing peroxide produced by reduction of oxygen is removed from the cathode compartments.

The aqueous solution containing peroxide will be in the form of a solution of hydrogen peroxide where an acidic electrolyte is used and in the form of a solution of alkali metal peroxide where an electrolyte of an aqueous solution of an alkali metal hydroxide is used.

In operation of the cell as a membrane cell aqueous electrolyte is charged to the anode compartments of the cell and water is charged to the cathode compartments of the cell, and oxygen-containing gas, e.g. air is fed to the cathodes, oxygen produced in the electrolysis and depleted electrolyte are removed from the anode compartments, cationic species are transported across the membranes to the cathode compartments of the cell, and peroxide solution produced by reduction of oxygen is removed from the cathode compartments of the cell.

In the electrolytic cell in which peroxide is produced the anodes, the diaphragm, and the membranes may be as hereinbefore described with reference to the chlor-alkali cell. On the gas electrode which serves as an air cathode in the electrolytic cell it is essential that the oxygen in the oxygen-containing gas fed to the cathode is reduced in a two electron process to peroxide and not reduced in a four electron process to hydroxide. The desired reduction process may be represented as follows In acidic electrolyte

$$O_2 + 2H^+ + 2e \rightarrow H_2O_2$$

In basic electrolyte

$$O_2 + 2H_2O + 2e \rightarrow H_2O_2 + 2OH^-$$

In order that the desired reduction process to peroxide may be effected the surface of the air cathode may be coated with a suitable electrocatalytically-active material, e.g. cobalt phthalocyanine.

In operation of the electrolytic cell to produce peroxide the oxygen which is produced in the electrolysis may be removed from the anode compartments of the cell and supplied to the air cathode as, or as part of, the oxygen-containing gas which is required at the cathodes.

Other specific uses of the gas electrode are as an anode in a fuel cell at which hydrogen is oxidised and as a cathode in a fuel cell at which oxygen is reduced. Such a fuel cell may comprise a separator, and the electrolyte may be acidic, e.g. aqueous phosphoric acid solution, or basic, e.g. aqueous potassium hydroxide solution.

The gas electrode of the invention may be used as a cathode in a battery, e.g. in a zinc/air battery or in an aluminium/air battery.

An embodiment of the invention will now be described with the aid of the accompanying figure which is a diagrammatic representation of an electrochemical cell for the production of peroxide.

The electrolytic cell comprises a container 1, an anode 2 of titanium having an electrocatalytically-active coating on the surface 3 thereof, and a cathode 4 of a porous substrate of titanium suboxide in which x in $TiO_x$ is approximately 1.75, the cathode 4 having an electrocatalytically-active coating on the surface 5 and on the internal pores thereof. The container 1 also contains a cation-exchange membrane 6 which divides the electrolytic cell into an anode compartment 7 and a cathode compartment 8. The anode compartment 7 comprises a pipe 9 through which electrolyte may be charged to the anode compartment and a pipe 10 through which products of electrolysis may be removed from the anode compartment. The cathode compartment 8 comprises a pipe 11 through which electrolyte may be charged to the cathode compartment and a pipe 12 through which products of electrolysis may be removed from the cathode compartment.

A pipe 13 leads from outside of the cell to the rear face 14 of the cathode 4 and through which oxygen-containing gas may be fed to the cathode.

The anode 2 is connected to an electrical lead 15 and the cathode 4 to an electrical lead 16.

Operation of the electrolytic cell in the production of peroxide will be described with reference to the electrolysis of a basic electrolyte.

In operation dilute sodium hydroxide solution was charged continuously to the anode compartment 7 through the pipe 9 and water was charged continuously to the cathode compartment 8 through the pipe 11 and a direct current was passed between the anode 2 and the cathode 4. Electrolysis of the dilute aqueous sodium hydroxide solution resulted in production of oxygen at the anode 2, and the oxygen together with depleted aqueous sodium hydroxide solution were removed continuously from the anode compartment 7 through the pipe 10. Air was charged continuously to the rear face 14 of the cathode 4 through pipe 13, and water was charged continuously to the cathode compartment 8 through pipe 11. Sodium ions produced in the electrolysis migrated across the membrane 6 from the anode compartment 7 to the cathode compartment 8, and air was reduced at the cathode 4 to peroxide. The product formed in the cathode compartment 8, an aqueous solution of sodium peroxide, was removed continuously from the cathode compartment 8 through pipe 12.

## Claims

1. An electrochemical cell (1) having a plurality of electrodes (2,4), wherein at least one of said electrodes is an anode (2), at least one of said electrodes is a cathode (4), and at least one (4) of said electrodes is of a porous gas electrode structure wherein said porous gas electrode structure comprises an electrically conductive titanium suboxide of a general formula TiOx, where x is less than 1.95 and greater than 0.25 and is associated with means (13) for supplying gas to the electrode (4).

2. An electrochemical cell according to Claim 1 wherein said porous electrode structure has a porosity of at least 10% and at most 80%.

3. An electrochemical cell according to Claim 2, wherein said porous electrode structure has a porosity of from 20% - 50%.

4. An electrochemical cell according to any preceding Claim, wherein the porous gas electrode structure comprises open interconnected pores.

5. An electrochemical cell according to any preceding Claim, wherein said porous gas electrode structure comprises a porous electrically conductive substrate having a coating of titanium suboxide of a general formula TiOx, where x is less than 1.95 and greater than 0.25.

6. An electrochemical cell according to Claim 5, wherein said porous substrate is of titanium.

7. An electrochemical cell according to any preceding Claim, wherein the gas supply means (13) is arranged so that the gas is supplied to the rear face of the electrode (4).

8. An electrochemical cell according to any preceding Claim, wherein the porous gas electrode structure has a coating of electrocatalytically active material to promote reduction of oxygen at the cathode.

9. A method of operating an electrochemical cell (1) having a plurality of electrodes (2,4), at least one of said electrodes being an anode (2) and at least one of said electrodes being a cathode (4), one of said electrodes (2,4) being a porous gas electrode structure, wherein said porous gas electrode structure comprises an electrically conductive titanium suboxide of the general formula TiOx, where x is less than 1.95 and greater than 0.25, and by supplying gas via gas supply means (13) to the electrode (4).

10. A method according to Claim 9, wherein electrolyte is continuously supplied to each electrode (2,4) and gas is continuously supplied to the porous gas electrode structure (4).

11. A method according to Claim 9 or 10, wherein the gas is supplied to the rear face of the electrode (4).

## Patentansprüche

1. Elektrochemische Zelle (1) mit einer Mehrzahl von Elektroden (2, 4), wobei wenigstens eine der genannten Elektroden eine Anode (2), wenigstens eine der genannten Elektroden eine Kathode (4) und wenigstens eine (4) der genannten Elektroden ein poröses Gaselektrodengefüge ist, wobei das genannte poröse Gaselektrodengefüge ein elektrisch leitendes Titan-suboxid einer allgemeinen Formel TiOx aufweist, wobei x kleiner als 1,95 und größer als 0,25 und mit einer Vorrichtung (13) für die Zufuhr von Gas zu der Elektrode (4) verbunden ist.

2. Elektrochemische Zelle nach Anspruch 1, wobei das genannte poröse Elektrodengefüge eine Porösität von wenigstens 10% und höchstens 80% hat.

3. Elektrochemische Zelle nach Anspruch 2, wobei das genannte poröse Elektrodengefüge eine Porösität zwischen 20% und 50% hat.

4. Elektrochemische Zelle nach einem der vorhergehenden Ansprüche, wobei das poröse Gaselektrodengefüge offene und miteinander in Verbindung stehende Poren aufweist.

5. Elektrochemische Zelle nach einem der vorhergehenden Ansprüche, wobei das genannte lose Gaselektrodengefüge ein poröses, elektrisch leitendes Substrat mit einer Schicht aus Titan-Suboxid einer allgemeinen Formel TiOx aufweist, wobei x kleiner als 1,95 und größer als 0,25 ist.

6. Elektrochemische Zelle nach Anspruch 5, wobei das genannte poröse Substrat aus Titan besteht.

7. Elektrochemische Zelle nach einem der vorhergehenden Ansprüche, wobei die Gaszufuhrvorrichtung (13) so angeordnet ist, daß das Gas der Rückseite der Elektrode (4) zugeführt wird.

8. Elektrochemische Zelle nach einem der vorhergehenden Ansprüche, wobei das poröse Gaselektrodengefüge eine Schicht aus elektrokatalytisch aktivem Material aufweist, um die Reduktion von Sauerstoff an der Kathode zu begünstigen.

9. Verfahren zum Betreiben einen elektrochemischen Zelle (1) mit einer Mehrzahl von Elektroden (2, 4), wobei wenigstens eine der genannten Elektroden eine Anode (2) und wenigstens eine der genannten Elektroden eine Kathode (4) ist, wobei eine der genannten Elektroden (2, 4) ein poröses Gaselektrodengefüge ist, wobei das genannte poröse Gaselektrodengefüge ein elektrisch leitendes Titan-Suboxid der allgemeinen Formel TiOx aufweist, wobei x kleiner als 1,95 und größer als 0,25 ist und wobei der Elektrode (4) Gas über eine Gaszufuhrvorrichtung (13) zugeführt wird.

10. Verfahren nach Anspruch 9, wobei jeder Elektrode (2, 4) kontinuierlich Elektrolyt und dem porösen Gaselektrodengefüge (4) kontinuierlich Gas zugeführt wird.

11. Verfahren nach Anspruch 9 oder 10, wobei das Gas der Rückseite der Elektrode (4) zugeführt wird.

## Revendications

1. Cellule électrochimique (1) pourvue d'une série d'électrodes (2,4), où au moins une desdites électrodes est une anode (2), au moins une desdites électrodes est une cathode (4), et au moins une desdites électrodes est formée à partir d'une structure poreuse à électrodes à gaz, et où cette structure poreuse à électrodes à gaz contient un sous-oxyde de titane électro-conducteur dont la formule générale est TiOx, x étant inférieur à 1,95 et supérieur à 0,25 et associé à des moyens (13) d'alimentation de l'électrode (4) en gaz.

2. Cellule électrochimique dans laquelle, conformément à la revendication 1, ladite structure poreuse à électrodes a une porosité minimale de 10 % et maximale de 80 %.

3. Cellule électrochimique dans laquelle, conformément à la revendication 2, ladite structure poreuse à électrodes a une porosité variant de 20 % à 50 %.

4. Cellule électrochimique dans laquelle, conformément à l'une des revendications précédentes, la structure poreuse à électrodes à gaz comporte des pores interconnectés ouverts.

5. Cellule électrochimique dans laquelle, conformément à l'une des revendications précédentes, la structure poreuse à électrodes à gaz comporte un substrat poreux électroconducteur recouvert d'une couche de sous-oxyde de titane dont la formule générale est TiOx, x étant inférieur à 1,95 et supérieur à 0,25.

6. Cellule électrochimique dans laquelle, conformément à la revendication 5, ledit substrat poreux est en titane.

7. Cellule électrochimique dans laquelle, conformément à l'une des revendications précédentes, les moyens d'alimentation en gaz (13) sont disposés de manière à ce que le gaz soit arrive par la partie arrière de l'électrode (4).

8. Cellule électrochimique dans laquelle, conformément à l'une des revendications précédentes, la structure poreuse à électrodes à gaz est recouverte d'un matériel actif électrocatalytique favorisant la réduction de l'oxygène au niveau de la cathode.

9. Méthode de fonctionnement d'une cellule électrochimique (1) pourvue d'une série d'électrodes (2,4), et d'après laquelle au moins l'une desdites électrodes est une anode (2) et au moins l'une desdites électrodes est une cathode (4), l'une desdites électrodes (2,4) consistant en une structure poreuse à électrodes à gaz, où ladite

structure poreuse à électrodes à gaz comporte un sous-oxyde de titane électro-conducteur dont la formule générale est TiOx, x étant inférieur à 1,95 et supérieur à 0,25, et où le gaz est fourni à l'électrode (4) à partir de moyens (13) d'alimentation en gaz.

**10.** Méthode conforme à la revendication 9, selon laquelle l'électrolyte est fourni sans interruption à chaque électrode (2,4) et le gaz est fourni sans interruption à la structure poreuse à électrodes à gaz (4)

**11.** Méthode conforme aux revendications 9 ou 10, selon laquelle l'alimentation en gaz se fait par l'arrière de l'électrode (4).

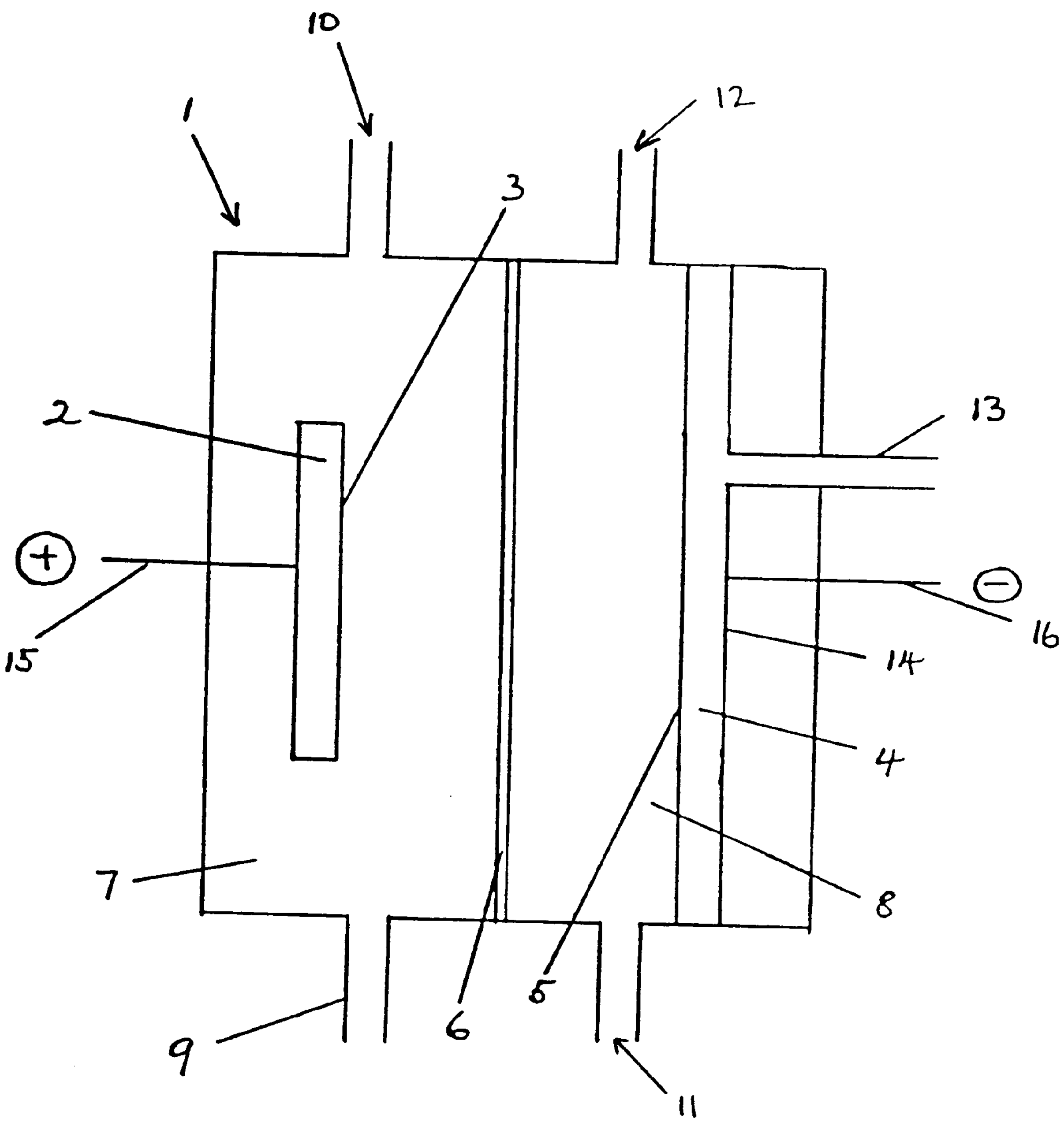


FIGURE 1